# EUROPÄISCHE PATENTANMELDUNG

(11) **EP 1 347 527 A2**
(43) Veröffentlichungstag der Anmeldung: **24.09.2003**
(21) Anmeldenummer: 03004710.4
(22) Anmeldetag: 04.03.2003
(51) Int. Cl.: H01M 4/86, H01M 4/88, H01M 8/10

(54) **Membran-Elektroden-Einheit (MEA) mit hydrophober Zwischenschicht**

(30) Priorität: 14.03.2002 DE 10211177
(71) Anmelder: DaimlerChrysler AG, 70567 Stuttgart (DE)
(72) Erfinder: Toth, Gabor, 89257 Illertissen-Jedesheim (DE)

(57) **Zusammenfassung**

Eine Membran-Elektroden-Einheit für eine Brennstoffzelle weist auf ihren Elektroden (2,3) nur eine niedrige Belegung mit Katalysator auf. Um ein Benetzen des Katalysators mit Wasser aus der Membran und einen damit verbundenen Leistungseinbruch der Brennstoffzelle zu vermeiden, ist zwischen der Membran (7) und wenigstens einer der Elektroden (2,3) erfindungsgemäß eine für Protonen durchlässige Schicht (9) aus einem hydrophoben Material angeordnet. Das hydrophobe Material besteht bevorzugt wenigtens teilweise aus einem perfluorierten Polymer (zB.PTFE), das durch atmosphärisches Plasmabeschichten auf die Membran (7) aufgebracht wird.
Die Belegung der Anode (2) mit Katalysator beträgt vorzugsweise weniger als 0,1mg(cm²).

## Beschreibung

Die Erfindung betrifft eine Membran-Elektroden-Einheit für eine Brennstoffzelle, bei welcher die Elektroden auf ihrer der Membran zugewandten Seite eine Katalysatorschicht mit niedriger Belegung aufweisen, sowie ein Verfahren zur Herstellung einer derartigen Membran-Elektroden-Einheit.

Eine derartige Membran-Elektroden-Einheit, kurz MEA (membraneelectrode-assembly), besteht gemäß dem allgemeinen Stand der Technik aus mehreren Schichten. Typischerweise umfaßt eine solche MEA eine grobporöse Schicht als Verteilungsschicht für der Membran zugeführte Stoffe, eine mikroporöse Schicht als Diffusionsschicht und eine gegebenenfalls mit der mikroporösen Schicht zusammengefaßte Katalysatorschicht. Beim Betrieb von Brennstoffzellen mit derartigen MEA's ist es nun allgemein bekannt, dass oberhalb von bestimmten Leistungen und damit im Bereich der Elektroden fließenden Strömen ein zunehmendes Benetzen des katalytisch aktiven Materials mit Wasser erfolgt, welches bei der Umsetzung der Ausgangsstoffe in der Brennstoffzelle entsteht und in den Bereich der Elektroden gelangt. Da die zur Verfügung stehende Fläche des katalytisch aktiven Materials dabei sehr stark abnimmt, kann die Funktion nicht mehr in vollem Umfang aufrecht erhalten werden und es kommt zu Leistungseinbrüchen in der jeweiligen Zelle, welche z.B. Teil eines Brennstoffzellenstacks.

Um diese Problematik zu verringern beschreibt die EP 0 872 906 B1 MEA's für eine Brennstoffzelle, wobei die als Elektroden genutzten porösen Schichten relativ hohe Anteile (10% bis 60%) eines hydrophoben Materials, wie z.B. Polytetrafluorethylen (PTFE / TEFLON®), aufweisen. Die Belegung der Katalysatoren mit Wasser kann so zwar ein wenig vermindert werden, der Aufbau weist jedoch den Nachteil einer schlechten Protonenleitfähigkeit aufgrund des hohen Anteils an PTFE auf.

Die WO 00/13243 beschreibt einen vergleichbaren Aufbau, bei dem die Elektroden über einen Siebdruck von geeigneten Mischungen aus katalytisch aktivem Material und einem geeigneten Material zur Hydrophobierung, z.B. PTFE, hergestellt werden. Dabei läßt sich mit einem Anteil von 0,01 bis 1 Gew.-% PTFE, bezogen auf den Anteil an metallischem Katalysator in der durch Siebdruck hergestellten Schicht, bereits eine ausreichende Hydrophobierung erreichen.

Des weiteren ist es aus dem allgemeinen Stand der Technik bekannt, dass die einzusetzenden Katalysatoren, wobei es sich hier im allgemeinen um Edelmetallkatalysatoren handelt, vergleichsweise teuer sind. Um nun, insbesondere im Hinblick auf eine Serienfertigung, Katalysatormaterial und damit Kosten einzusparen gehen neuste Bemühungen dahin, die Belegung mit Katalysator hinsichtlich der eingesetzten Menge an katalytisch aktivem Material stark zu reduzieren. Das katalytisch aktive Material kann dazu beispielsweise mittels elektrochemischer Prozesse auf der mikroporösen Schicht abgeschieden werden.

Derartige MEA's mit einer Katalysatorschicht mit niedriger Belegung, was hier gleichbedeutend damit sein soll, dass die Belegung der Elektroden mit Katalysator 200mg/cm² oder weniger beträgt, sind dann jedoch hinsichtlich der Empfindlichkeit gegen das Benetzen des Katalysators mit Wasser, aufgrund der prinzipbedingt geringen Gesamtmenge des katalytisch aktiven Materials, noch weitaus kritischer als die oben erwähnten MEA's.

Es ist nun die Aufgabe der vorliegenden Erfindung, eine MEA bereitzustellen, welche trotz einer Katalysatorschicht mit niedriger Belegung an katalytisch aktivem Material einen hohen Austausch an Protonen und eine hohe Leistung der Brennstoffzelle ermöglicht.

Erfindungsgemäß wird diese Aufgabe durch eine MEA gelöst, bei welcher zwischen der Membran und der Katalysatorschicht eine für Protonen durchlässige Schicht aus einem hydrophoben Material angeordnet ist.

Dem Erfinder hat sich in überraschender Weise gezeigt, dass sich bereits mit einer sehr dünnen Zwischenschicht aus dem hydrophoben Material ein sehr großer Effekt erzielen läßt, ohne dass die Protonenleitfähigkeit durch diese dünne Zwischenschicht beeinträchtigt wird. Bei der aus dem Stand der Technik bekannten Mischung von Elektroden- und Katalysatormaterialien mit dem hydrophoben Material entsteht eine Schicht mit relativ gleichmäßiger Verteilung dieser Materialien. Kommt nun Wasser in den Bereich einer solchen Schicht, so kann das hydrophobe Material das Benetzen des Katalysators in der Schicht nur teilweise verhindern, da sowohl der Katalysator als auch das hydrophobe Material in der gesamten Schicht verteilt sind. Durch den erfindungsgemäßen Aufbau mit der Schicht aus dem hydrophoben Material zwischen der das Wasser beinhaltenden Membran und der Katalysatorschicht, wird dagegen das Wasser von der Katalysatorschicht abgehalten. Dies verringert einerseits die Gefahr des Benetzens massiv und hält andererseits das Wasser länger in der Membran. Die Performance der MEA steigt dadurch erheblich an.

Versuche haben gezeigt, dass die Zwischenschicht in idealer weise sehr dünn sein sollte, um die Protonenleitfähigkeit nicht oder nur in vernachlässigbar kleiner Weise zu beeinträchtigen. Dies läßt sich beispielsweise mit einer Zwischenschicht erreichen, welche das hydrophobe Material in der Größenordnung von 0,1 µg/cm² oder weniger aufweist. Mit einer derartigen, kleinen Menge an hydrophobem Material lassen sich aber bereits signifikante Verbesserungen in der Funktionsweise der die hydrophobe Zwischenschicht aufweisenden MEA's gegenüber denen ohne die hydrophobe Zwischenschicht erreichen.

Die Erfindung erlaubt also in besonders vorteilhafter Weise, den Einsatz von MEA's mit niedriger Belegung der Katalysatorschicht und den damit zu erzielenden Kostenvorteilen, ohne dass die Funktionsweise der MEA's und damit letztendlich auch die Funktionsweise der Brennstoffzelle, welche insbesondere als PEM-Brennstoffzelle ausgebildet ist, darunter leidet.

In einer besonders günstigen Ausführung der Erfindung ist die erfindungsgemäße für Protonen durchlässige Schicht bzw. Zwischenschicht zwischen der Anode und der Membran angeordnet.

Besonders hier, auf der Seite der Anode, kann die erfindungsgemäße Zwischenschicht in besonders vorteilhafter Weise eingesetzt werden. Da auf der Seite der Anode prinzipbedingt weniger Wasser anfällt, hier sind lediglich durch die Membran zurück diffundierende Wassermengen zu erwarten, kann anodenseitig in idealer Weise mit einer sehr geringen Belegung der Katalysatorschicht gefahren werden, welche sich dann in der Kontaktebene zwischen Membran und Anode ausdehnt. Da gerade bei solchen Aufbauten die Benetzung des Katalysators, aufgrund seiner fehlenden Ausdehnung in die Tiefen der Anode, besonders kritisch ist, ist die erfindungsgemäße hydrophobe Zwischenschicht hier besonders günstig. Ohne diese Zwischenschicht wäre bei sehr kleinen Belegungen mit dem Katalysator, beispielsweise weniger als 0,1 mg/cm², keine ausreichend gute Funktionsweise der MEA's zu gewährleisten. Bereits mit sehr kleinen Mengen an hydrophobem Material in der Zwischenschicht, beispielsweise weniger als 0,05 µg/cm², läßt sich die Funktionsweise jedoch sicherstellen.

Der Einsatz der erfindungsgemäßen Zwischenschicht auf der Seite der Kathode ist prinzipiell auch denkbar und liefert ähnliche Vorteile, wie der oben beschriebene Einsatz im Bereich der Anode. Allerdings ist durch das auf der Seite der Kathode anfallende Produktwasser der Brennstoffzelle ohnehin eine etwas höhere Belegung mit dem Katalysator und eine entsprechende Ausdehnung des Katalysators in die Tiefe der Kathode notwendig, so dass auch für die hydrophobe Schicht etwas höhere Mengen an hydrophobem Material benötigt werden. Die besonderen kathodenseitigen Vorteile der Erfindung liegen daher nicht nur in der Hydrophobierung sondern vor allem auch darin, dass das entstehende Produktwasser länger in der Membran gehalten und diese damit auch in kritischen Betriebszuständen besser durchfeuchtet wird.

Ein Verfahren zur Herstellung der erfindungsgemäßen Schicht kann in besonders günstiger Weise vorsehen, dass die für Protonen durchlässige Schicht durch Aufbringen von hydrophobem Material auf die Membran hergestellt wird.

Aufgrund der Ähnlichkeit des Materials, welches üblicherweise für die Membranen in Brennstoffzellen, insbesondere in PEM-Brennstoffzellen, Verwendung findet zu den gängigen hydrophoben Materialien, beispielsweise PTFE, kann sehr einfach und ohne vorbereitende Schritte, Haftvermittler oder dergleichen eine ausreichend gute Haftung des hydrophoben Materials auf der Membran erzielt werden. Außerdem wird durch die direkte Anbindung der Zwischenschicht an die Membran das entstehende Produktwasser länger in der Membran gehalten und diese damit auch in kritischen Betriebszuständen besser durchfeuchtet.

Weitere vorteilhafte Ausgestaltungen der Erfindung ergeben sich aus den restlichen Unteransprüchen und aus dem anhand der Zeichnung näher dargestellten Ausführungsbeispiel.

Es zeigt:
- Fig. 1: einen Ausschnitt aus einem möglichen Aufbau einer MEA mit der erfindungsgemäßen Zwischenschicht; und
- Fig. 2: ein Strom-Spannungs-Diagramm einer Anode der MEA mit niedriger Belegung an Katalysator, mit und ohne die erfindungsgemäße Zwischenschicht.

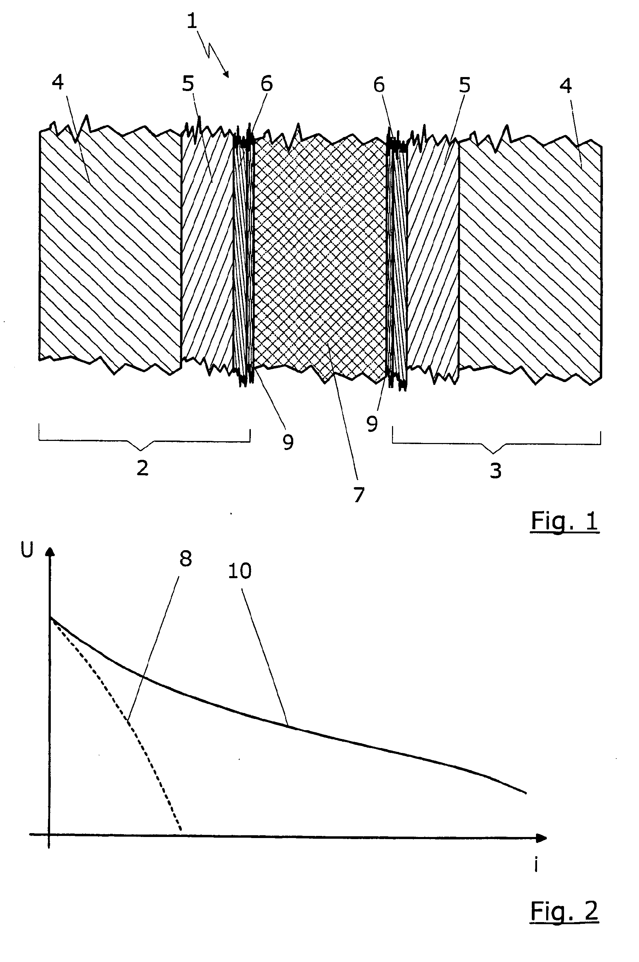

In Fig. 1 ist ein Ausschnitt einer schematisch dargestellten Membran-Elektroden-Einheit (MEA) 1 zu erkennen. Die MEA 1 soll dabei Teil einer Brennstoffzelle, insbesondere einer PEM-Brennstoffzelle, sein, welche in ihrer Gesamtheit nicht dargestellt ist. Die MEA 1 zeigt den üblichen Aufbau mit zwei Elektroden 2, 3, welche jeweils aus einer grobporösen Schicht 4 als Gasverteilungsschicht, einer mikroporösen Schicht 5 als Gasdiffusionsschicht und einer stark überhöht dargestellten Katalysatorschicht 6 bestehen. Dieser Schichtaufbau ist jeweils auf beiden Seiten einer Membran 7 angeordnet, welche in an sich bekannter Weise als Elektrolyt genutzt wird. Die Katalysatorschichten 6 weisen in an sich bekannter Weise Katalysatoren aus Edelmetallen auf, beispielsweise Platin. Um die eingesetzten Mengen des Katalysators und damit die Materialkosten zu minimieren, werden die Elektroden 2, 3 nur mit sehr geringen Mengen an Katalysator, beispielsweise weniger als 0,5 mg/cm², belegt. Eine derartige niedrige Belegung der Elektroden 2, 3 mit dem Katalysator kann beispielsweise durch elektrochemisches Abscheiden des Katalysators auf den mikroporösen Schichten 5 der Elektroden 2, 3 erfolgen. Dabei reicht auf der Seite der Anode 2 ein vorwiegend flächiges Abscheiden von bis zu 0,1 mg/cm² des Katalysators aus, während auf der Seite der Kathode 3 ein etwas in die Tiefe der mikroporösen Schicht 5 eindringendes Abscheiden des Katalysators in einer etwas größeren Menge, also beispielsweise bis zu den oben bereits genannten 0,5 mg/cm², sinnvoll ist.

Bei diesen niedrigen Belegungen der Elektroden 2, 3 mit dem Katalysator spielt nun das Benetzen des Katalysators mit anfallendem Wasser eine besondere Rolle. So wird beispielsweise auf der Seite der Anode 2 Wasser anfallen, welches aus dem Bereich der Membran 7 zurück diffundiert. Bei der geringen Menge an eingesetztem Katalysator sorgt nun ein Benetzen des Katalysators für Leistungseinbrüche der mit einer derartigen MEA 1 ausgestatteten Brennstoffzelle, da das anfallende Wasser den Katalysator "flutet" und somit für die Edukte der an ihm ablaufenden Reaktionen unzugänglich macht.

Die in dem Strom-Spannungs-Diagramm in Fig. 2 gestrichelt dargestellte iU-Kennlinie 8 einer Anode 2 mit einer niedrigen Katalysatorbelegung zeigt dementsprechend einen sehr frühen Leistungseinbruch, welcher bei deutlich weniger als der Hälfte der Lastgrenze von MEA's 1 mit einer hohen Belegung an Katalysator, also mehr als z.B. 200mg/cm², liegt.

Um diese Problematik des Benetzen des Katalysators mit anfallendem Wasser zu minimieren bzw. zu vermeiden wird nun zwischen die Elektroden 2, 3, und die Membran 7 eine Schicht 9 als Zwischenschicht eingebracht. Diese Zwischenschicht 9 besteht aus einem hydrophoben Material, beispielsweise einem perfluorierten Polymer, bevorzugt Polytetrafluorethylen (PTFE) -welches auch unter der Bezeichnung TEFLON® bekannt ist. Die Zwischenschicht 9 wird dabei so dünn bzw. mit sowenig Material ausgeführt, dass durch sie keine oder nur eine vernachlässigbar kleine Beeinträchtigung der Protonenleitfähigkeit auftritt. Als sinnvolle und in ihrer hydrophoben Wirkung ausreichende Menge an PTFE für die Zwischenschicht 9 hat sich 0,1 µg/cm² oder weniger herausgestellt, wobei dieser Wert auf der Seite der Anode 2 ohne Beeinträchtigung der hydrophoben Wirkung auf unter 0,05µg/cm² gesenkt werden kann.

Als Möglichkeiten zum Auftrag der Zwischenschicht lassen sich beispielsweise ein Aufsprühen des PTFE's in einer geeigneten Emulsion nennen. Bei den Versuchen der Erfinder wurde beispielsweise "Molykote PTFE-Spray" der Dow Corning GmbH, München genutzt. Aber auch andere Möglichkeiten, welche einen vergleichbaren sich aus vielen kleinen statistisch verteilten Partikeln des hydrophoben Materials bildenden Auftrag des PTFE's gewährleisten, können zur Herstellung der Zwischenschicht 9 genutzt werden, beispielsweise ein atmosphärisches Plasmabeschichten. Durch die Ähnlichkeit der für die Membran 7 üblicherweise verwendeten Polymere, insbesondere im Bereich der den Elektroden 2, 3 zugewandten Oberfläche der Membran 7, und dem Polymer des PTFE's kommt es dabei ohne zusätzliche vorbereitende Maßnahmen zu einer ausreichend guten Haftung zwischen der Membran 7 und der Zwischenschicht 9.

In Fig. 2 ist mit der durchgezogenen iU-Kennlinie 10 eine Kennlinie dargestellt, welche sich bei der Verwendung einer der iU-Kennlinie 8 entsprechenden Anode 2 ergibt, welche jedoch zusätzlich mit der Zwischenschicht 9 versehen ist. Deutlich ist die Verbesserung der leistungsmäßigen Performance zu erkennen. Mit der Anode 2, welche die Zwischenschicht 9 aufweist, lassen sich bis in den Bereich der üblicherweise auftreten Lastgrenzen einer Elektrode mit hoher Belegung an Katalysator noch Spannungen in der Größenordnung von 30-40% der Leerlaufspannung erzielen.

Besonders im Bereich der Anode 2 macht sich eine derartige Zwischenschicht 9 sehr positiv bemerkbar, da durch sie erst die flächige Belegung der Anode 2 mit einer sehr kleinen Menge (weniger als 0,1 mg/cm²) des sehr kostenintensiven Katalysators ermöglicht wird, ohne dass diese geringe Gesamtmenge an Katalysator auf der Seite der Anode 2 durch das hier anfallende Wasser in seiner Aktivität gehemmt wird.

Grundsätzlich ist ein vergleichbarer Aufbau auch auf der Seite der Kathode 3 denkbar. Dabei sind jedoch die Mengen an Katalysator und an PTFE entsprechend der obigen Ausführungen etwas höher wählen, da kathodenseitig auch das von der Brennstoffzelle gelieferte Produktwasser anfällt. Durch die höhere Menge an Katalysator kann jedoch erreicht werden, dass eine Teil des Katalysators, insbesondere wenn dieser sich auch in die Tiefe der mikroporösen Schicht 5 der Kathode 3 erstreckt, immer zumindest ein Teil des Katalysators "trocken" und funktionsfähig bleibt. Durch den Einsatz er Zwischenschicht, wird dieser Teil in soweit erhöht, dass auch hier mit deutlich kleineren Mengen an Katalysator als beim Stand der Technik, eine vergleichbare Performance erzielt werden kann. Außerdem hält die Zwischenschicht 9 im Bereich der Kathode 3 das entstehende Produktwasser länger in der Membran 7 zurück, so dass diese ideal durchfeuchtet wird und schon von daher eine bessere Funktionsfähigkeit der MEA 1 in den ansonsten hinsichtlich eines Austrocknens der Membran 7 kritischen Leistungsbereichen ermöglicht.

## Patentansprüche

1. Membran-Elektroden-Einheit für eine Brennstoffzelle, wobei die Elektroden (2,3) auf ihrer der Membran (7) zugewandten Seite eine Katalysatorschicht (6) mit niedriger Belegung aufweisen,
**dadurch gekennzeichnet,**
**dass** zwischen der Membran (7) und der Katalysatorschicht (6) wenigstens einer Elektrode (2,3) eine für Protonen durchlässige Schicht (9) aus einem hydrophoben Material angeordnet ist.

2. Membran-Elektroden-Einheit nach Anspruch 1,
**dadurch gekennzeichnet,**
**dass** das hydrophobe Material wenigstens teilweise aus einem perfluorierten Polymer besteht, bevorzugt aus Polytetrafluorethylen (PTFE).

3. Membran-Elektroden-Einheit nach Anspruch 1 oder 2,
**dadurch gekennzeichnet,**
**dass** die Menge an hydrophobem Material in der für Protonen durchlässigen Schicht (9) 0,1 µg/cm² oder weniger ist.

4. Membran-Elektroden-Einheit nach Anspruch 1, 2 oder 3,
**dadurch gekennzeichnet,**
**dass** die Belegung der Elektroden (2,3) mit Katalysator 0,5 mg/cm² oder weniger ist.

5. Membran-Elektroden-Einheit nach einem der Ansprüche 1 bis 4,
**dadurch gekennzeichnet,**
**dass** die für Protonen durchlässige Schicht (9) zwischen der Membran (7) und Katalysatorschicht (6) der Anode (2) angeordnet ist.

6. Membran-Elektroden-Einheit nach Anspruch 5,
**dadurch gekennzeichnet,**
**dass** die Menge an hydrophobem Material in der für Protonen durchlässigen Schicht (9) 0,05 µg/cm² oder weniger ist.

7. Membran-Elektroden-Einheit nach Anspruch 5 oder 6,
**dadurch gekennzeichnet,**
**dass** die Belegung der Anode (2) mit Katalysator 0,1 mg/cm² oder weniger ist.

8. Verfahren zur Herstellung einer Membran-Elektroden-Einheit nach einem der Ansprüche 1 bis 7,
**dadurch gekennzeichnet,**
**dass** die für Protonen durchlässige Schicht (9) durch Aufbringen von hydrophobem Material auf die Membran (7) hergestellt wird.

9. Verfahren zur Herstellung einer Membran-Elektroden-Einheit nach Anspruch 8,
**dadurch gekennzeichnet,**
**dass** das Aufbringen des hydrophoben Materials durch Aufsprühen einer das hydrophobe Material aufweisenden Suspension erfolgt.

10. Verfahren zur Herstellung einer Membran-Elektroden-Einheit nach Anspruch 8,
**dadurch gekennzeichnet,**
**dass** das Aufbringen des hydrophoben Materials durch atmosphärisches Plasmabeschichten erfolgt.
